(19) Europäisches Patentamt
European Patent Office
Office européen des brevets

(11) **EP 2 056 144 B1**

(12) **EUROPÄISCHE PATENTSCHRIFT**

(45) Veröffentlichungstag und Bekanntmachung des Hinweises auf die Patenterteilung:
**08.08.2012   Patentblatt 2012/32**

(51) Int Cl.:
***G02B 6/42*** *(2006.01)*

(21) Anmeldenummer: **08075850.1**

(22) Anmeldetag: **28.10.2008**

(54) **Endstück für Lichtleitfaser**

End piece for an optical fibre

Elément d'extrémité pour fibres optiques

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.10.2007   DE 102007052956**

(43) Veröffentlichungstag der Anmeldung:
**06.05.2009   Patentblatt 2009/19**

(73) Patentinhaber: **Highyag Lasertechnologie GmbH 14532 Stahnsdorf (DE)**

(72) Erfinder: **Niedrig, Roman 12167 Berlin (DE)**

(74) Vertreter: **Boeckh, Tobias HERTIN Anwaltssozietät Kurfürstendamm 54/55 10707 Berlin (DE)**

(56) Entgegenhaltungen:
**EP-A- 0 155 379          EP-A- 1 435 536
DE-A1- 3 101 378        DE-A1- 3 605 659
DE-T2- 60 011 995      US-A- 3 843 865
US-A- 4 273 109          US-A- 4 737 006
US-A- 5 133 709          US-A- 5 699 464**

**Beschreibung**

Die Erfindung betrifft ein Endstück für eine Lichtleitfaser.

Um die Kopplung eines Laserstrahls mit einer Lichtleitfaser zu optimieren, ist es oftmals gewünscht, das Ende einer Lichtleitfaser so zu gestalten, dass eine Linsenwirkung erzeugt wird.

Dazu ist aus dem Stand der Technik bekannt, entweder die Spitze oder das Ende der Lichtleitfaser selbst zu verrunden, oder einen am Faserende montierten Glasstab zu verrunden, oder ein Glasstab mit planer Endfläche zu verwenden, der aus einem Material mit einer radial veränderlichen Brechzahl besteht (Gradienten-Index-Linse).

Allen bekannten Anordnungen dieser Art liegt die Aufgabe zugrunde, entweder das aus dem Lichtleitkabel austretende Licht zu kollimieren oder das Licht eines optischen Senders, also z.B. einer Laserdiode, auf die Lichtleitfaserspitze abzubilden, um einen möglichst hohen Kopplungswirkungsgrad zu erzielen.

Für die direkte Kopplung mit der Strahlung eines optoelektronischen Senders oder Empfängers, z.B. einer Laserdiode, werden teilweise sehr komplexe Formen für die Gestaltung der Endfläche vorgeschlagen, so dass dem Verfahren zur Erzeugung der gewünschten Fläche meist eine besondere Bedeutung zukommt.

So offenbart die DE 23 58 881 C2 ein Verfahren, mit dem eine gekrümmte Fläche direkt aus dem Ende der Lichtleitfaser geformt werden kann und in der DE 31 01 378 C2 wird eine Vorrichtung und ein Verfahren angegeben, wonach an das Faserende ein zylindrisches Glasstück angesetzt wird, dessen freies Ende vollständig verrundet wird, womit eine (reelle) Abbildung der Faserendfläche auf eine emittierende Fläche erzielt wird.

Dagegen wird bei der in der US 4 737 006 beschriebenen Anordnung ein mit einer angeformten Linse versehener Quarzstab am Faserende verwendet, um den Strahl zu kollimieren.

Die DE 31 34 508 A1 offenbart die Anbringung einer anamorphotisch abbildenden Fläche an eine Lichtleitfaser, wobei die Fläche beispielsweise die Form eines Rotationsellipsoids haben kann.

Aus der DE 36 05 659 A1 entnimmt man die Möglichkeit, einen Glasstab an das Faserende anzubringen, dessen freies Ende unter Wärmeeinwirkung zunächst konisch geformt wird und sich durch die Wirkung der Oberflächenspannung dann eine asphärisch geformte Fläche ergibt.

Dokument US-A-5699464 beschreibt eine Vorrichtung zur effizienten Kopplung zwischen einer Multimodefaser und optischen Vorrichtungen wie z.B. einem optischen Detektor und einer Leuchtdiode. Die Kopplungsvorrichtung besteht aus einem Abschnitt homogener Glasfaser mit einer konvexen Mikrolinse an dessen einem Ende, wobei der Abschnitt am anderen Ende an eine Multimodefaser angeschweißt ist. Die Länge des Abschnitts ist größer als die Brennweite der Mikrolinse.

Die Verwendung einer Gradientenindex-Linse in Form des an das Faserende angeschweißten Glasstabs zur Kollimation des Strahls geht aus der DE 199 27 167 A1 hervor.

In der DE 600 11 995 T2 wird ein Faserkollimator angegeben, bei dem das an die Faser angespleißte optische Element im Bereich der Spleißstelle einen axialen Verlauf des Brechungsindex aufweist.

Im Bereich der Strahlführung für Laserlicht mit sehr hoher Leistung hat ein an die Faserspitze montiertes Glasstück eine grundsätzlich andere Funktion, nämlich die Leistungsdichte an der Glas-Luft-Grenzfläche zu reduzieren, worauf auch in der DE 199 27 167 A1 hingewiesen wird.

Dabei ist es meist üblich, einen homogenen Glasstab zu verwenden, dessen Endfläche eben ist. Dadurch bleibt sowohl die Apertur des abgestrahlten Lichts erhalten, als auch der Durchmesser des lichtführenden Faserkerns, dessen virtuelles Abbild sich nun freilich innerhalb des angesetzten Glasstabes befindet. Auf die Funktion hat dies jedoch keinen Einfluß. Da der Durchmesser des Lichtkegels an der Endfläche des Glasstabes deutlich größer ist als an der Faserspitze, ist die Leistungsdichte an der Glas-Luft-Grenzfläche erheblich verringert.

Bei der Strahlführung von Laserlicht mit sehr hoher Leistung ist es außerdem wichtig, die Abbildungsfehler aller im Strahlengang befindlichen optischen Elemente zu berücksichtigen, was auch für einen an die Faserspitze montierten Glasstab gilt. So wird üblicherweise vernachlässigt, dass eine plane Fläche am Ende des Glasstabs einen Öffnungsfehler erzeugt, der zwar gering ist, aber dennoch insbesondere bei single-mode-Laserstrahlung eine Rolle spielen kann.

Bei Laserstrahlquellen mit hoher Brillianz, also mit kleinem Strahlparameterprodukt bei hoher Leistung, tritt weiterhin in zunehmendem Maß das Problem der laserleistungsinduzierten zusätzlichen Brechkraft in den optischen Komponenten auf. Bei einer der Lichtleitfaser nachfolgenden Optik, die die Laserstrahlung z.B. in eine Bearbeitungszone fokussiert, hat dies ein axiales Wandern der Fokusposition zur Folge. Dies lässt sich prinzipiell reduzieren, wenn die Vergrößerung der nachfolgenden Optik reduziert werden kann.

Demgemäß ist es Aufgabe der vorliegenden Erfindung unter Vermeidung der beschriebenen Nachteile des Stands der Technik ein Endstück für eine Lichtleitfaser zur Verfügung zu stellen, welches eine optimale Einkopplung bzw. Auskopplung von Laserstrahlung in bzw. aus einer Lichtleitfaser ermöglicht.

Gelöst wird diese Aufgabe dadurch, dass ein Endstück für eine Lichtleitfaser an das Ende der Faser angebracht wird, bestehend aus einem optischen Element, welches aus einem mit dem Kern der Lichtleitfaser identischen Material besteht oder aus einem optischen Glas mit einer Brechzahl, die der Brechzahl des Faserkerns entspricht, wobei die der Faserspitze abgewandte Seite eine konvexe sphärische Krümmung aufweist, und wobei die Krümmung der Endfläche des optischen Elementes und die Länge des optischen Elementes in einem definierten Verhältnis zueinander stehen.

Die Erfindung basiert auf der Erkenntnis, dass es sich als günstig erwiesen hat, wenn zur Strahlführung eine Faser mit größerem Kerndurchmesser bei kleinerer Apertur verwendet wird. Genau dann nämlich kann die Vergrößerung der nachfolgenden Optik reduziert werden. Ein weiterer Vorteil kommt dadurch zustande, dass bei einer Lichtleitfaser, die mit ausreichend kleiner Apertur abstrahlt, die nachfolgende Optik wesentlich einfacher aufgebaut werden kann. Es stellt sich daher in mehrfacher Weise als günstig heraus, wenn die Lichtleitfaser mit deutlich geringerer Apertur abstrahlen kann. Genau die gleiche Wirkung wird erzielt, wenn stattdessen durch die Abbildungseigenschaften des erfindungsgemäßen Endstücks der Faser-kern virtuell vergrößert wird und die Apertur der Strahlung verringert wird.

Erfindungsgemäß ist vorgesehen, dass das Verhältnis des Krümmungsradius R der Endfläche des Endstücks zur Länge L des Endstücks in einer optimalen Ausgestaltung durch den folgenden Zusammenhang $R = L * n / ( n + 1 )$ definiert ist, wobei n die Brechzahl des Endstückes ist. Darüber hinaus ist es auch vorgesehen, dass der Radius der Krümmung in einem bestimmten Bereich liegen kann. Der Krümmungsradius R entspricht demnach mindestens der halben Länge des Endstücks und maximal der gesamten Länge des Endstücks.

Bei der Erfindung handelt es sich demnach um eine besondere Gestaltung des Abschlusses einer Lichtleitfaser, mit dem Zweck der optimalen Einkopplung oder Auskopplung von Laserstrahlung in die bzw. aus der Lichtleitfaser.

Die Erfindung ist somit geeignet zur Verwendung in einem Lichtleitkabelstecker eines Lichtleitkabels für die Übertragung von (Hochleistungs-) Laserstrahlung.

Die Erfindung besteht darin, dass an das Faserende ein optisches Element montiert wird, z.B. durch Spleißen, wobei die der Faser abgewandte Seite des Elements eine konvexe sphärische Form hat. Dabei ist die Bedingung einzuhalten, dass der Radius der sphärischen Fläche gleich dem (ca.) 0,592-fachen der Länge des Elements beträgt. Diese Relation gilt für Quarz bei 1064 nm (d.h. bei Brechzahl n = 1,44963), für andere Wellenlängen gelten leicht abweichende Faktoren. Ebenso sollte bei der Verwendung von großen Faser-Kern-Durchmessern der Faktor um einige Prozent vergrößert werden. Die sphärische Endfläche kann entspiegelt werden.

Weitere erfindungsgemäße Vorteile liegen in folgendem:

Das Lichtleitfaserende mit erfindungsgemäßem Endstück dient zur Ein-/Aus- Kopplung von Laserstrahlung. Die Erfindung dient zur Verwendung mit Hochleistungs-Festkörper-Lasern wie einem Nd:YAG-Laser, Scheibenlaser, Faserlaser oder Diodenlaser, wobei Laser mit Leistungen > 1 kW bevorzugt sind. Ferner dient die Erfindung zur Verwendung bei Laserquellen mit kleinem Strahlparameterprodukt (SPP) bis hin zu Single-Mode-Strahlung. Vorzugsweise liegt die Beugungsmaßzahl $M^2$ der Laserquelle im Bereich von 1 bis etwa 60, entsprechend einem Strahlparameterprodukt (SPP) von 0,3 bis ca. 20 mm*mrad bei einer Wellenlänge im Bereich von 1 μm.

Am Ende der Lichtleitfaser, unmittelbar angrenzend an die Endfläche der Faserspitze, befindet sich ein optisches Element aus einem mit dem Kern der Lichtleitfaser identischen Material oder aus einem optischen Glas mit einer Brechzahl, die der Brechzahl des Faserkerns entspricht. Wesentliches Merkmal dieses Elements ("Endstück") ist, dass die äußere Seite, d.h. die der Faserspitze abgewandte Seite, eine konvexe sphärische Krümmung aufweist, die in einem bestimmten Verhältnis zur Länge des Elementes steht.

Das Endstück kann am Faserende angespleisst sein, d.h. durch ein thermisches Schmelz-Schweissverfahren mit dem Faserende verbunden sein.

Ferner kann das Endstück auch unterbrochen sein, das heißt aus zwei TeilElementen bestehen, wobei der Abstand zwischen den Teilen möglichst gering ist, also nur einen Bruchteil der Länge des Endstücks ausmacht. Diese Ausführung kann insbesondere aus fertigungstechnischen Gründen sinnvoll sein, um eine bessere und einfachere Zentrierung der Faserspitze bzw. der ausgekoppelten Strahlung vornehmen zu können. Dabei ist das mit der Faser verbundene erste Teil-Element fixiert, während das zweite Teil-Element mit der sphärischen Fläche radial, d.h. senkrecht zur optischen Achse verschiebbar angeordnet ist. Die beiden Teile des Endstücks sind dann nur über ihre mechanische Halterung, wie z.B. die Hülse eines Steckverbinders, der die Faser mit dem zweiteiligen Endstück aufnimmt, miteinander verbunden.

Die gekrümmte Endfläche des Endstücks kann vorzugsweise mit einer dielektrischen Beschichtung zur Reflexionsminderung versehen sein. Ebenso können bei geteilter Ausführung des Elements die Zwischenflächen beschichtet sein.

Die Länge des Elements liegt etwa im Bereich zwischen 2 mm und 50 mm. Der Durchmesser des Elements liegt etwa im Bereich zwischen 0,5 mm und 20.

Das Element kann in einer besonderen Ausführung auch eine Kugel sein, was den Vorteil hat, dass die gekrümmte Endfläche zum Außendurchmesser des Elements automatisch perfekt zentriert ist.

Das Element kann zudem auf der Lichtleitfaser-Seite derart konisch verjüngt ausgebildet sein, d.h. wie ein an der Spitze abgeschnittener Konus geformt sein, dass der Enddurchmesser genau dem Manteldurchmesser der Lichtleitfaser entspricht. Dadurch wird eine thermische Schmelz-Schweiß-Verbindung (Spleißen) vereinfacht.

Da die zur Übertragung von Hochleistungslaserstrahlung verwendeten Lichtleitfasern zumeist aus Quarzglas bestehen, besteht das Endstück vorzugsweise ebenfalls aus Quarzglas, insbesondere aus einem synthetischen hochreinen Quarzglas.

Besonders bevorzugt ist, dass die gekrümmte Fläche des Endstücks eine aplanatische Fläche in Bezug zur Faserspitze bildet, da dann der Öffnungsfehler verschwindet. Der Krümmungsradius R der Endfläche des Endstücks verhält sich dann zur Länge L des Endstück wie R = L * n / ( n + 1), wobei n die Brechzahl des Endstücks ist. Für n = 1,44963 (Quarz bei 1064 nm) gilt also R = 0,5918 * L. Die virtuelle Vergrößerung der Faserspitze ist 2,1 und die Apertur wird auf das 0,48-fache verringert. Für R = L verschwindet der Öffnungsfehler ebenfalls. Diese Lösung ist jedoch weniger günstig, da die Vergrößerung der Faserspitze dann nur 1,45 beträgt und die Apertur nur auf das 0,69-fache reduziert wird (jeweils für Quarz).

Daraus ergeben sich für das Verhältnis zwischen Krümmung der Endfläche und Länge des erfindungsgemäßen Endstücks bevorzugte Bereiche, nämlich dass bei einer Wellenlänge von 1064 nm und der Verwendung von Quarz als Material das Verhältnis von Krümmung zu Länge des Elementes 0,590 - 0,595, bevorzugt 0,592 beträgt. Der Krümmungsradius der äußeren Endstück-Fläche soll mindestens so groß wie die halbe Länge des Endstücks und maximal so groß wie die ganze Länge sein. Innerhalb dieses angegebenen Bereichs ist der Öffnungsfehler der Fläche deutlich geringer im Vergleich zur planen Endfläche.

Die Brechzahl des erfindungsgemäßen Elements ist homogen und konstant, d.h. es gibt keinen Brechzahl-Verlauf in axialer oder radialer Richtung.

Durch die konvexe Krümmung des Endstücks entsteht eine positive Brechkraft, welche zwei wesentliche Auswirkungen hat: Einerseits wird die Apertur, also der Öffnungswinkel des Strahlenkegels der ein- bzw. ausgekoppelten Strahlung verringert; andererseits wird die Faserspitze virtuell vergrößert abgebildet.

Die Strahlung verlässt das Endstück nicht als kollimiertes bzw. quasi paralleles Strahlenbündel, sondern divergent, allerdings mit verringerter Divergenz im Vergleich zu einer Faser ohne Endstück oder einer Faser mit einem Endstück mit planer Endfläche. Die Divergenz soll einer Apertur zwischen ca. 0,03 bis 0,12 entsprechen. Besonders bevorzugt ist der Aperturbereich zwischen 0,04 und 0,07.

Die Erfindung betrifft ferner einen Lichtleitfaserabschluss zum Ein- und Auskoppeln von Laserstrahlung in eine Lichtleitfaser mit einem optischen Element, welches am Ende der Lichtleitfaser angebracht ist und dessen von der Faser abgewandte Seite sphärisch konvex gekrümmt ist, dadurch gekennzeichnet, dass das Element eine konstante Brechzahl besitzt, die etwa gleich der Brechzahl des Kerns der Lichtleitfaser ist, dass die Lichtleitfaserspitze mittels der durch die gekrümmte Fläche des stabförmigen Elements gebildete Linse vergrößert und virtuell abgebildet ist, wobei das virtuelle Bild der Faserspitze mindestens soweit von der sphärischen Fläche des stabförmigen Elements entfernt ist wie dessen Länge entspricht, sowie dadurch, dass die Numerische Apertur der Lichtstrahlung der ausgekoppelten oder einzukoppelnden Strahlung kleiner ist als die Numerische Apertur der Strahlung innerhalb der Lichtleitfaser, aber mindestens 25% davon beträgt, so dass das Element nicht die Wirkung eines Kollimators hat.

Die Erfindung betrifft auch einen Steckverbinder zum Anschluss an einen Hochleistungslaser oder an eine andere Vorrichtung, in der Laserstrahlung verwendet wird, z.B. an eine Laserbearbeitungsoptik, umfassend ein Lichtleitkabel, an welchem an der Faserspitze, in die Laserlicht ein- bzw. ausgekoppelt wird, ein Endstück gemäß einem oder mehreren der Ansprüche 1 bis 8 angeordnet ist. Ein derartiger Steckverbinder dient dem Abschluss eines Lichtleitkabels in dem Sinne, dass die im Lichtleitkabel geführte Lichtleitfaser an der Stelle endet, wo das Laserlicht ein- bzw. ausgekoppelt wird und daher die Faserspitze mit dem Endstück vorzugsweise in einen Steckverbinder eingebaut ist. Ein Lichtleitkabel kann also zwei derartige Steckverbinder aufweisen, an jedem Ende eines. Ein derartiger Steckverbinder ist mit einem komplementären Steckverbinder einer Laserlichtquelle oder einer anderen Vorrichtung, in der Laserstrahlung verwendet wird, verbindbar und in diesem zentrierbar. Vorzugsweise ist der erfindungsgemäße Steckverbinder mit einer Kühleinrichtung versehen, die mittels eines Kühlmittels (beispielsweise Wasser) entstandene Wärme abführen kann.

Besondere Vorteile der Erfindung liegen in folgendem

- unter der angegebenen Bedingung ist der Öffnungsfehler praktisch gleich Null, d.h. das Strahl-Parameter-Produkt wird nicht beeinflusst.

- Der Faserkern wird virtuell auf das 2,1-fache vergrößert.

- Gleichzeitig wird die Apertur auf das 0,48-fache verkleinert.

- Die üblicherweise genutzte Apertur eines Standard-Lichtleitkabels (125 mrad) wird also auf 60 mrad verringert. Bei einer so geringen Apertur kann die Kollimation des Strahls bereits mit ausreichender Qualität durch eine einzelne (Plankonvex-) Linse erfolgen kann.

- Ein nachfolgendes optisches System kann erheblich einfacher aufgebaut werden.

- Durch die vergrößerte Faser-Endfläche benötigt die nachfolgende Optik eine geringere Vergrößerung.

- Wegen der geringeren Vergrößerung und der einfacher aufgebauten Optik ist der leistungsabhängige Fokus-Shift der nachfolgenden Optik erheblich geringer.

- Die Erfindung kann auch angewendet werden, ohne dass das Element angespleisst werden muß; dann wird das Element möglichst nahe an der Faserspitze montiert und man wird zweckmäßigerweise beide Endflächen des Elements entspiegeln.

Weitere vorteilhafte Maßnahmen und Ausführungen sind in den Unteransprüchen und der Beschreibung, sowie den nachfolgenden Figuren beschrieben - ohne jedoch darauf beschränkt zu sein. Die Erfindung wird anhand der folgenden Figuren nunmehr näher dargestellt; es zeigt:

Figur 1: Schematische Darstellung des Lichtleitkabel-Abschlusses mit dem Ende der Lichtleitfaser und dem mit der Faserspitze verbundenem Endstück mit sphärisch geformter Endfläche.

Figur 2: Mögliche Ausgestaltung des Endstücks als zweiteiliges optisches Element, bei dem das erste Teil-Element mit der Faserspitze verbunden ist und das zweite Teil-Element die sphärisch geformte Endfläche trägt, wobei das zweite Teilelement zur Justage der Zentrierung des virtuellen Bildes der Faserspitze radial verstellbar angeordnet ist.

Figur 3: Mögliche Ausgestaltung des Endstücks als ein- oder zweiteiliges Element, bei dem der Bereich, der mit der Faser verbunden ist, konisch geformt ist.

Figur 4: Schematische Darstellung des Lichtleitkabel-Abschlusses, eingebaut in einen Steckverbinder für Laser-Strahlung.

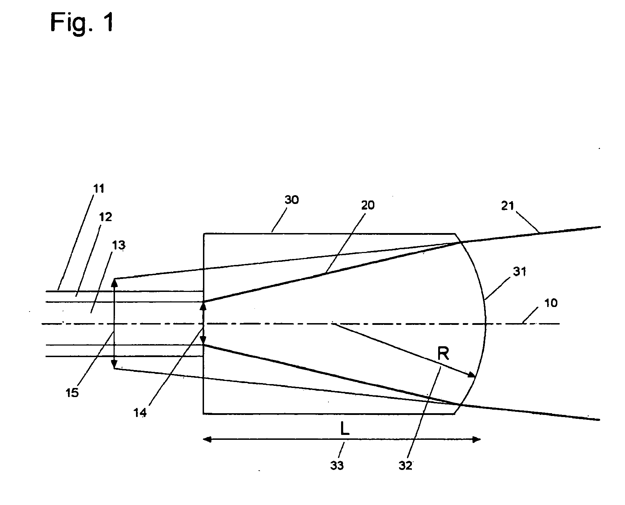

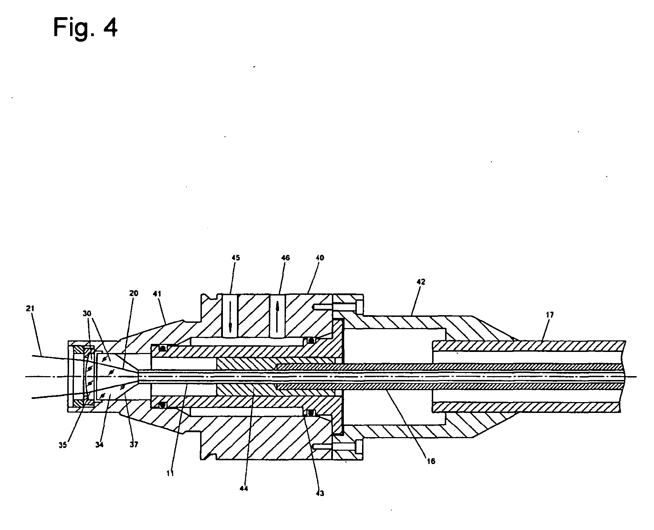

Figur 1 zeigt schematisch das erfindungsgemäße Endstück 30 mit einer gekrümmten Endfläche 31. Eine Lichtleitfaser 11, bestehend aus einem Mantel (Cladding) 12 und einem inneren Kern (core) 13 der Lichtleitfaser, ist mit ihrer Spitze 14 mit dem Endstück 30 verbunden. Das in der Faser geführte Laserlicht tritt aus der Faserspitze 14 aus und bildet im Endstück 30 einen Strahlenkegel 20 mit einer bestimmten numerischen Apertur. Der Laserstrahl 20 wird von der sphärisch gekrümmten Endfläche 31 gebrochen und formt außerhalb des Endstücks 30 einen Strahlenkegel 21 mit einer geringeren Apertur, d.h. mit einer geringeren Divergenz, als innerhalb des Endstücks nach Austritt aus der Faserspitze 14. Dadurch erscheint das virtuelle Bild 15 der Faserspitze 14 vergrößert. Das Verhältnis von Krümmungsradius R (32) der Endfläche des Endstücks zur Länge L (33) des Endstücks ist so gewählt, dass der Öffnungsfehler der sphärischen Endfläche 31 verschwindet oder zumindest vernachlässigbar klein ist.

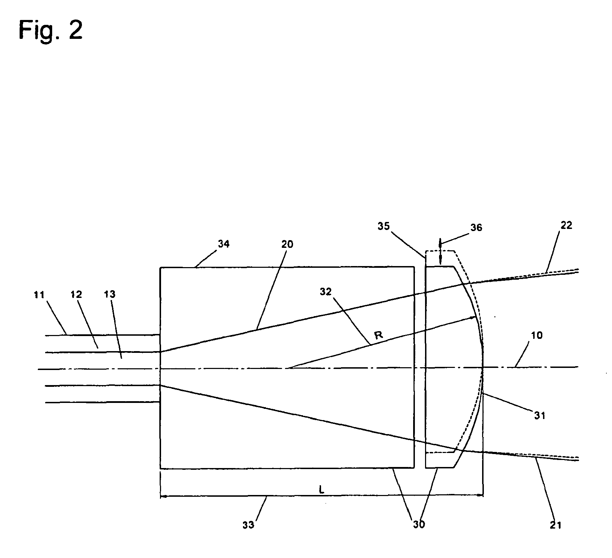

In Figur 2 ist eine mögliche Ausgestaltung dargestellt, bei der das Endstück 30 in zwei Teil-Elemente 34, 35 aufgeteilt ist. Dabei ist das zweite Teil-Element 35 mit der sphärischen Endfläche 31 radial, d.h. senkrecht zur optischen Achse, verschiebbar angeordnet, wodurch der Strahlenkegel 21 des Laserstrahls außerhalb des Endstücks leicht verkippt werden kann (22). Dadurch ist eine Möglichkeit gegeben, auf einfache Weise das virtuelle Bild 15 der Faserspitze 14 zu zentrieren und damit mechanische Toleranzen auszugleichen.

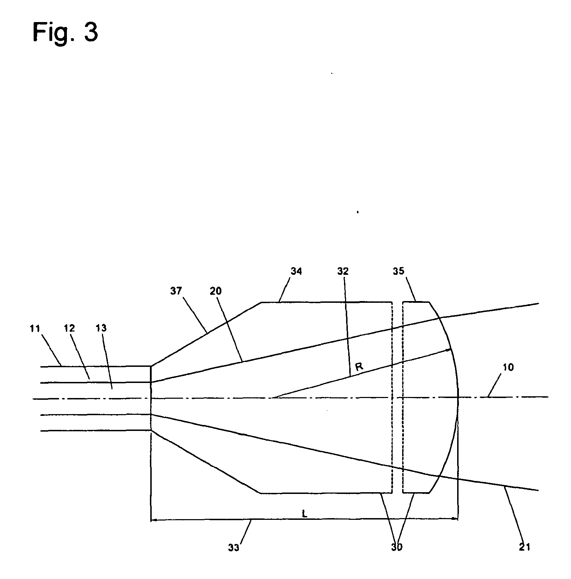

Figur 3 zeigt eine weitere mögliche Gestaltung des Endstücks. Hierbei ist der Bereich 37 des Endstücks 30, der mit der Faserspitze 14 verbunden ist, konisch geformt. Vorzugsweise ist der auf diese Weise verringerte Durchmesser der Endfläche des Endstücks, auf der Seite, die mit der Faser verbunden ist, genauso groß gewählt wie der Außendurchmesser des Mantels 12 der Lichtleitfaser 11. Eine Schmelz-Schweiss-Verbindung der Faser mit dem Endstück wird dadurch erleichtert.
Schließlich ist in Figur 4 dargestellt, wie das erfindungsgemäße Endstück in einen typischen Steckverbinder für Hochleistungs-Laserstrahlung eingebaut ist. Der Steckverbinder besteht aus einem Grundkörper 40, der beispielsweise einen Zentrier-Konus 41 aufweisen kann, womit der Stecker in einem komplementären Steckverbinder oder einer Buchse zentriert werden kann. Der Grundkörper nimmt eine Kühl-Hülse 43 auf, wodurch ein Hohlraum um die Kühl-Hülse geschaffen wird, welcher von einem Kühlmittel durchflossen wird. Dadurch ist für eine effiziente Kühlung der Faser-Halterung 44 gesorgt. In der Faser-Halterung wird die Lichtleitfaser 11 durch Klebung oder Klemmung gehalten. Weiterhin ist mit dem Grundkörper 40 ein Schutzschlauch-Halter 42 verbunden, mit dem der Schutzschlauch 17 durch Klebung oder Klemmung verbunden ist. Der Schutzschlauch 17 bildet die äußere mechanische Schutzhülle des Lichtleitkabels und beherbergt die Lichtleitfaser 11. Weitere Komponenten, wie z.B. Signalleitungen, Sensorleitungen, oder Sicherheitseinrichtungen können ebenfalls durch den Schutzschlauch 17 geführt werden.

**Bezugszeichenliste:**

10 optische Achse
11 Lichtleitfaser
12 Mantel (cladding) der Lichtleitfaser
13 Kern (core) der Lichtleitfaser
14 Endfläche der Lichtleitfaser bzw. Faserspitze
15 virtuelles Bild der Faserspitze
16 Beschichtung (Kunststoff-Ummantelung) der Lichtleitfaser
17 Schutzschlauch
20 von der Faserspitze abgestrahltes Laserlicht bzw. auf die Faserspitze fokussiertes Laserlicht
21 abgestrahltes Laserlicht nach Brechung an der Endfläche des optischen Elements
22 abgestrahltes Laserlicht bei radial verschobenem zweiten Teil-Element

30  optisches Element bzw. Endstück
31  gekrümmte Endfläche des optischen Elements
32  Krümmungsradius der Endfläche des optischen Elements
33  Länge des optischen Elements
34  erstes (hinteres) Teil-Element des geteilten Endstücks
35  zweites (vorderes) Teil-Element des geteilten Endstücks mit der sphärisch gekrümmten Endfläche
36  Möglichkeit zur Verschiebung bzw. Justierung
37  konisch geformter Bereich des Endstücks
40  Lichtleitkabel (LLK)-Steckverbinder-Grundkörper
41  Zentrier-Konus
42  Schutzschlauch-Halter
43  Kühl-Hülse
44  Lichtleitfaser-Halterung
45  Kühlmittel-Zufluss
46  Kühlmittel-Abfluss

**Patentansprüche**

1. Endstück (30) für eine Lichtleitfaser (11), bestehend aus einem optischen Element, welches aus einem mit dem Kern (13) der Lichtleitfaser (11) identitischen Material oder aus einem optischen Glas mit einer Brechzahl, die der Brechzahl des Faserkerns entspricht, wobei
die der Faserspitze (14) abgewandte Seite eine konvexe sphärische Krümmung aufweist, und die Krümmung der Endfläche (31) des Endstücks (30) und Länge (33) des optischen Elementes in einem definierten Verhältnis zueinander stehen, wobei der Krümmungsradius R (32) der Endfläche mindestens der halben Länge (33) des Endstücks und maximal der gesamten Länge des Endstücks entspricht und das Verhältnis des Krümmungsradius R der Endfläche zur Länge L des Endstück durch den folgenden Zusammenhang definiert ist:

$$R = L * n / ( n + 1 ),$$

wobei n die Brechzahl des Endstückes ist.

2. Endstück nach Anspruch 1, **dadurch gekennzeichnet, dass** bei Verwendung von Quarz als Material, das Verhältnis von Krümmung zu Länge des Elementes 0,590 - 0,595, bevorzugt 0,592 bei einer Wellenlänge von 1064 nm beträgt.

3. Endstück nach Anspruch 1 oder 2, **dadurch gekennzeichnet, dass** das Endstück an der zum Faserende gewandten Seite angespleisst ist.

4. Endstück nach wenigstens einem der vorherigen Ansprüche, **dadurch gekennzeichnet, dass** es aus wenigstens zwei Teilen aufgebaut ist, wobei ein erstes Teil mit der Lichtleitfaser verbunden ist und ein zweites Teil mit der sphärischen Fläche radial verschiebbar angeordnet ist.

5. Endstück nach wenigstens einem der vorherigen Ansprüche, **dadurch gekennzeichnet, dass** die Apertur der Laserstrahlung außerhalb des Endstücks zwischen 0,03 bis 0,12 liegt, bevorzugt bei 0,04 bis 0,07.

6. Endstück nach wenigstens einem der vorherigen Ansprüche, **dadurch gekennzeichnet, dass** die Länge des Endstücks zwischen 2 bis 50 mm liegt.

7. Endstück nach wenigstens einem der vorherigen Ansprüche, **dadurch gekennzeichnet, dass** der Durchmesser des Endstücks zwischen 0,5 bis 20 mm liegt.

8. Endstück nach wenigstens einem der vorherigen Ansprüche, **dadurch gekennzeichnet, dass** die der Lichtleitfaser zugewandte Seite konisch verjüngt ist, wobei der Enddurchmesser genau dem Manteldurchmesser der Lichtleitfaser entspricht.

9. Verwendung eines Endstücks nach einem oder mehreren der Ansprüche 1 bis 8 in Hochleistungs-Festkörperlasern, insbesondere Nd:YAG-Laser, Scheibenlaser, Faserlaser oder Diodenlaser zur Ein-/Auskopplung von Laserstrahlung.

10. Verwendung eines Endstücks nach Anspruch 9 in Lasern mit Leistungen oberhalb 1 kW.

11. Verwendung eines Endstücks nach Anspruch 9 oder 10 bei Laserquellen, die eine Strahlung mit einer Beugungsmaßzahl $M^2$ zwischen 1 und 60 emittieren, was bei einer Wellenlänge von ca. 1 $\mu$m einem Strahlparameterprodukt von 0,3 bis 20 mm*mrad entspricht.

12. Lichtleitfaserabschluss zum Ein- und Auskoppeln von Laserstrahlung in eine Lichtleitfaser mit einem optischen Element, welches am Ende der Lichtleitfaser angebracht ist und dessen von der Faser abgewandte Seite sphärisch konvex gekrümmt ist, wobei das Element einem Endstück gemäß einem oder mehreren der Ansprüche 1 bis 8 entspricht.

13. Steckverbinder zum Anschluss an einen Hochleistungslaser oder an eine andere Vorrichtung, in der Laserstrahlung verwendet wird, umfassend ein Lichtleitkabel, an welchem an der Faserspitze, in die Laserlicht ein- bzw. ausgekoppelt wird, ein Endstück gemäß einem oder mehreren der Ansprüche 1 bis 8 angeordnet ist.

## Claims

1. End piece (30) for an optical fiber (11) consisting of an optical element, which is made of the same material as the core (13) of the optical fiber (11) or made of an optical glass with an refractive index that corresponds to the refractive index of the fiber core, whereas
the side facing away from the fiber tip (14) has a convex spherical curvature and the curvature of the end face (31) of the end piece (30) and the length (33) of the optical element have a defined ratio whereas the curvature radius R (32) of the end face corresponds to at least half the length (33) of the end piece and to no more than the entire length of the end piece. The ratio between the curvature radius R of the end face and the length L of the end piece is defined as follows:

$$R = L * n / (n+1)$$

in which n is the refractive index of the end piece.

2. End piece according to claim 1, **characterized in that** if quartz is used as a material, the ratio between curvature and length of the element is between 0.590 and 0.595, preferably 0.592 at a wavelength of 1064 nm.

3. End piece according to claim 1 or 2, **characterized in that** the end piece is spliced to the side facing the fiber end.

4. End piece according to at least one of the previous claims, **characterized in that** it is made up of at least two parts whereas a first part is connected to the optical fiber and a second part is arranged with the spherical surface in a radially adjustable way.

5. End piece according to at least one of the previous claims, **characterized in that** the aperture of the laser beam outside the end piece is between 0.03 and 0.12, preferably between 0.04 and 0.07.

6. End piece according to at least one of the previous claims, **characterized in that** the length of the end piece is between 2 and 50 mm.

7. End piece according to at least one of the previous claims, **characterized in that** the diameter of the end piece is between 0.5 and 20 mm.

8. End piece according to at least one of the previous claims, **characterized in that** the side facing the optical fiber is tapered whereas the end diameter corresponds exactly to the cladding diameter of the optical fiber.

9. Use of the end piece according to one or several of claims 1 to 8 in high-performance solid-state lasers especially Nd: YAG lasers, disk lasers, fiber lasers or diode lasers for the coupling/decoupling of the laser beam.

10. Use of an end piece according to claim 9 in lasers with outputs exceeding 1 kW.

11. Use of an end piece according to claim 9 or 10 with laser sources that emit a beam with a quality factor M2 between 1 and 60, which at a wavelength of approx. 1 $\mu$m corresponds to a beam parameter product between 0.3 and 20 mm*mrad.

12. Optical fiber closure for the coupling and decoupling of laser beams into an optical fiber with an optical element, which is attached to the end of the optical fiber and whose side facing away the fiber has a spherical convex shape whereas the element corresponds to an end piece according to one or several of the claims 1 to 8.

13. Connector to connect to a high-performance laser or to another device for which a laser beam is used comprising a fiber-optic light cable at which an end piece according to one or several of the claims 1 to 8 is arranged on the fiber tip into which the laser light is coupled / decoupled.

## Revendications

1. Embout (30) pour une fibre optique (11) se composant d'un élément optique qui se compose d'un matériau identique au coeur (13) de la fibre optique (11) ou d'un verre optique avec indice de réfraction qui correspond à l'indice de réfraction du coeur de fibre, le côté opposé à la pointe de fibre (14) présentant une courbure convexe sphérique et la courbure de la surface d'extrémité (31) de l'embout (30) et la longueur (33) de l'élément optique se trouvant l'une par rapport à l'autre dans une relation définie, le rayon de la courbure R (32) de la surface d'extrémité correspondant au moins à la demi-longueur (33) de l'embout et au maximum à la longueur totale de l'embout et le rapport du rayon de courbure R de la surface d'extrémité par rapport à la longueur L de l'embout étant défini par le contexte suivant :

$$R = L*n / (n + 1)$$

n étant l'indice de réfraction de l'embout

**2.** Embout selon la revendication 1 **caractérisé en ce que** lors de l'utilisation de quartz comme matériau, le rapport entre la courbure et la longueur de l'élément est de 0,590 - 0,595, de préférence 0,592 pour une longueur d'onde de 1064nm.

**3.** Embout selon la revendication 1 ou 2 **caractérisé en ce que** l'embout est épissé au côté dirigé vers l'extrémité de fibre.

**4.** Embout selon au moins l'une des revendications précédentes **caractérisé en ce qu'**il est structuré à partir de deux éléments au moins, un premier élément étant relié à la fibre optique et un deuxième élément avec la surface sphérique étant placé de façon radiale et mobile.

**5.** Embout selon au moins l'une des revendications précédentes **caractérisé en ce que** l'ouverture du rayonnement laser hors de l'embout se situe entre 0,03 et 0,12, de préférence de 0,04 à 0,07.

**6.** Embout selon au moins l'une des revendications précédentes **caractérisé en ce que** la longueur de l'embout se situe entre 2 et 50 mm.

**7.** Embout selon au moins l'une des revendications précédentes **caractérisé en ce que** le diamètre de l'embout se situe entre 0,5 et 20 mm.

**8.** Embout selon au moins l'une des revendications précédentes **caractérisé en ce que** la face dirigée vers la fibre optique est raccourcie en forme conique, le diamètre final correspondant exactement au diamètre de la gaine de la fibre optique.

**9.** Utilisation d'un embout selon une ou plusieurs des revendications 1 à 8 dans des lasers à corps solide de haute puissance, en particulier laser Nd-YAG, laser à disque, laser à fibre ou laser à diodes pour couplage/découplage de rayonnement laser.

**10.** Utilisation d'un embout selon la revendication 9 dans des lasers d'une puissance supérieure à 1 kW.

**11.** Utilisation d'un embout selon la revendication 9 ou 10 pour des sources laser émettant un rayonnement avec un indice de diffraction $M^2$ entre 1 et 60, ce qui correspond pour une longueur d'onde d'env. 1 $\mu$m un produit de paramètre de rayonnement de 0,3 à 20 mm*mrad.

**12.** Extrémité de fibre optique pour couplage et découplage de rayonnement laser dans une fibre optique avec un élément optique appliqué à l'extrémité de la fibre optique et dont le côté opposé à la fibre présente une courbure convexe sphérique, l'élément correspondant à un embout selon une ou plusieurs revendications 1 à 8.

**13.** Connecteur à fiche pour branchement à un laser de haute puissance ou à un autre dispositif dans lequel le rayonnement laser est utilisé, comprenant un conducteur optique auquel, à la pointe de laser dans laquelle la lumière laser est couplée ou découplée, est appliqué un embout selon une ou plusieurs revendications 1 à 8,

# Fig. 1

# Fig. 2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2358881 C2
- DE 3101378 C2
- US 4737006 A
- DE 3134508 A1

- DE 3605659 A1
- US 5699464 A
- DE 19927167 A1
- DE 60011995 T2